# EUROPÄISCHE PATENTSCHRIFT

(11) **EP 1 618 726 B1**
(45) Veröffentlichungstag und Bekanntmachung des Hinweises auf die Patenterteilung: **08.04.2009**
(21) Anmeldenummer: 04711347.7
(22) Anmeldetag: 16.02.2004
(51) Int. Cl.: H04L 29/08

(54) **AUTOMATISIERUNGSSYSTEM MIT AUTOMATISCHER BEREITSTELLUNG VON DIAGNOSEINFORMATIONEN**
AUTOMATION SYSTEM WITH AUTOMATIC PROVISION OF DIAGNOSTIC INFORMATION
SYSTEME D'AUTOMATISATION AVEC MISE A DISPOSITION AUTOMATIQUE D'INFORMATIONS DIAGNOSTIQUES

(30) Priorität: 30.04.2003 DE 10319551
(43) Veröffentlichungstag der Anmeldung: 25.01.2006
(73) Patentinhaber: SIEMENS AKTIENGESELLSCHAFT, 80333 München (DE)
(72) Erfinder: WIEDENBERG, Peter, 90537 Feucht (DE); WOLF, Rene, 90402 Nürnberg (DE)
(86) Internationale Anmeldenummer: PCT/EP2004/001447
(87) Internationale Veröffentlichungsnummer: WO 2004/098153

(56) Entgegenhaltungen:
- US-A- 6 112 246
- US-A1- 2002 095 644
- US-B1- 6 170 007

## Beschreibung

Die Erfindung betrifft ein Automatisierungssystem mit automatischer Bereitstellung von Diagnoseinformationen.

Automatisierungssysteme, die eine Vielzahl von Teilnehmern aufweisen, welche an einen gemeinsamen Kommunikationskanal angeschlossen sind, sind bereits bekannt. Ein Kommunikationskanal kann ein Bus oder ein Netzwerk sein.

Weiterhin ist es bereits bekannt, bezüglich der Teilnehmer derartiger Automatisierungssysteme im Rahmen der Projektierung des Systems Diagnoseinformationen manuell zu erstellen und zu hinterlegen. Dieses manuelle Erstellen von Diagnoseinformationen ist sehr zeitaufwendig.

Aus der US 2002/0095644 A1 ist eine webbasierte Werkzeugkontrolle im Zusammenhang mit der Halbleiterherstellung bekannt. Die dort beschriebene Erfindung offenbart ein System zur Verbindung von Halbleiterherstellungswerkzeugen unter Verwendung eines Datennetzwerks und eines mikroprozessorbasierten Interfaces, das jedem Prozesswerkzeug zugeordnet ist. Das Datennetzwerk und das Interface sorgen für eine Kommunikation gemäß bekannter Standards über Intranet- oder Internetverbindungen zu einem oder mehreren entfernt angeordneten Browsern. Die beim Prozess anfallenden Daten sind in Echtzeit auf dem Netzwerk verfügbar und können von einem Bediener an beliebiger Stelle des Netzwerks abgerufen werden.

Aus der US 6,170,007 B1 ist es bekannt, eine Webzugangsfunktionalität in eine Vorrichtung zu integrieren, um verbesserte Benutzerinterfacefunktionen für die Vorrichtung zu ermöglichen. Ein Webserver in der Vorrichtung schafft Zugang zu den Benutzerinterfacefunktionen über eine Webseite. Ein Netzwerkinterface in der Vorrichtung ermöglicht Zugang zu dieser Webseite durch einen Webbrowser derart, dass ein Benutzer des Webbrowsers auf die Benutzerinterfacefunktionen der Vorrichtung über die Webseite zugreifen kann.

In der US 6,112,246 A sind ein System und ein Verfahren zum Zugreifen auf Informationen einer entfernt angeordneten Vorrichtung und zur Übertragung dieser Informationen an eine Client-Workstation bekannt. Bei diesem bekannten Verfahren ist in die über einen Bus oder das Ethernet verbundenen Teilnehmer jeweils ein Mikro-Server integriert, welcher Zugang zu Daten des Teilnehmers ermöglicht, beispielsweise unter Verwendung von Webseiten. Die Daten der Teilnehmer werden auf Abruf oder zyklisch an einen entfernt angeordneten dient übertragen. Der Mikro-Server stellt die Daten des jeweiligen Teilnehmers derart um, dass sie einem Kommunikationsprotokoll entsprechen.

Ausgehend vom letztgenannten Stand der Technik liegt der Erfindung die Aufgabe zugrunde, ein System anzugeben, bei welchem der Überblick über Diagnosedaten der Teilnehmer eines Automatisierungssystems weiter verbessert ist.

Diese Aufgabe wird durch ein Automatisierungssystem mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass durch die automatische Bereitstellung von Diagnoseinformationen seitens jedes Teilnehmers, insbesondere auch seitens jedes neu an das System angeschlossenen Teilnehmers, der Bediener einer Diagnosestation sich schnell und einfach einen Überblick über alle verfügbaren Diagnosedaten der Systemteilnehmer verschaffen kann. Da die Diagnosedaten, die die einzelnen Systemteilnehmer betreffen, in einem einheitlichen Anzeigeformat angezeigt werden, ist der Überblick über die verfügbaren Diagnosedaten besonders übersichtlich.

Diese Vorteile werden insbesondere dadurch erreicht, dass entweder die Teilnehmer selbst ihre Diagnoseinformationen automatisch in einem einheitlichen Standardformat bzw. einem interpretierbaren Format zur Verfügung stellen oder dass die von den Teilnehmern zur Verfügung gestellten proprietären Diagnoseinformationen in der Diagnosestation in ein einheitliches Standardformat bzw. ein interpretierbares Format konvertiert werden. Die im einheitlichen Standardformat vorliegenden Diagnoseinformationen werden dann unabhängig von der jeweiligen Quelle der Diagnoseinformationen mittels eines Browsers in ein einheitliches Anzeigeformat umgesetzt.

Vorzugsweise handelt es sich bei dem genannten Standardformat, in welchem die Diagnoseinformationen dem Kommunikationskanal zur Verfügung gestellt werden, um das XML-Format. Das XML-Format (Extensible Markup Language) entspricht einer Metasprache, die textbasiert zu übertragende Daten beschreibt. Diese Metasprache wurde ursprünglich zu dem Zweck geschaffen, Dokumente einfach zu strukturieren, da ein Vorliegen von strukturierten Daten bei einem Datenaustausch vorteilhaft ist. Dieses an sich bekannte XML-Format wird in vorteilhafter Weise bei der vorliegenden Erfindung dazu verwendet, Diagnosedaten der einzelnen Teilnehmer eines Automatisierungssystems in einheitlicher Form zur Verfügung zu stellen.

Ein Automatisierungssystem mit den im Anspruch 5 angegebenen Merkmalen hat den Vorteil, dass die Diagnosestation unmittelbar nach dem Anschließen eines neuen Teilnehmers an den Kommunikationskanal automatisch Kenntnis von dem neuen Teilnehmer erlangt und auch Informationen über dessen Identität erhält. Ein manuell erfolgendes Anmelden eines neuen Teilnehmers bzw. ein manuelles Konfigurieren entfällt.

Eine Darstellung der am Display angezeigten Diagnoseinformationen in Form einer Liste, wie sie Gegenstand des Anspruchs 6 ist, verbessert für den Bediener die Übersichtlichkeit über die von den Teilnehmern zur Verfügung gestellten Diagnoseinformationen.

Eine Darstellung der am Display angezeigten Diagnoseinformationen in Form einer grafischen Darstellung oder einer Liste, in welcher die verschiedenen Teilnehmern zugehörigen Diagnoseinformationen gemäß den Merkmalen des Anspruchs 7 in einem einheitlichen Anzeigeformat angezeigt werden, verbessert die Übersichtlichkeit über die von den Teilnehmern zur Verfügung gestellten Diagnoseinformationen weiter.

Die Vorteile der Merkmale des Anspruchs 8 bestehen darin, dass von verschiedenen Herstellern stammende Teilnehmergeräte an den gemeinsamen Kommunikationskanal angeschlossen werden können und dabei dennoch die Einheitlichkeit der Displaydarstellung der Diagnoseinformationen gewahrt bleibt.

Stellen die an den Kommunikationskanal angeschlossenen Teilnehmer ihre Diagnoseinformationen im Sinne der Merkmale des Anspruchs 9 ständig zur Verfügung, dann hat die Diagnosestation ständigen Zugriff auf die Diagnosedaten aller an den Kommunikationskanal angeschlossenen Teilnehmer. Dies ist insbesondere dann vorteilhaft, wenn es sich bei der Diagnosestation um ein tragbares Gerät handelt, beispielsweise ein Notebook. Dieses tragbare Gerät kann an beliebiger Stelle des Automatisierungssystems, dessen Teilnehmer örtlich weit verstreut angeordnet sein können, an den gemeinsamen Kommunikationskanal angeschlossen werden. Die gewünschte Übersicht über die Diagnoseinformationen aller Teilnehmer steht an allen Zugangsstellen des gemeinsamen Kommunikationskanals zur Verfügung.

Mit den Merkmalen des Anspruchs 10 ist in vorteilhafter Weise eine Selektion durchführbar, aufgrund welcher nur selektierten Teilnehmern zugehörige Diagnoseinformationen auf dem Display dargestellt werden. Beispielsweise kann die Selektion darin bestehen, nur die den im Automatisierungssystem enthaltenen Reglern zugehörigen Diagnoseinformationen oder nur die den im Automatisierungssystem enthaltenen Kesseln zugehörigen Diagnoseinformationen auf dem Display anzuzeigen. Dies erhöht insbesondere dann, wenn die Zahl der Teilnehmer des Automatisierungssystem groß ist, die Übersichtlichkeit über momentan gewünschte Diagnoseinformationen weiter.

Der Vorteil der im Anspruch 11 angegebenen Bedieneinheit besteht darin, dass der Bediener selbst Selektionskriterien vorgeben kann. Dies ist beispielsweise dann von Vorteil, wenn sich im Laufe eines Prozesses zeigt, dass ein oder mehrere bestimmte Teilnehmer besonders störanfällig sind und deshalb ständig beobachtet werden müssen.

Weitere vorteilhafte Eigenschaften der Erfindung ergeben sich aus deren beispielhafter Erläuterung anhand der Figuren. Es zeigt:
- Figur 1: eine Blockdarstellung eines Automatisierungssystems,
- Figur 2: eine Blockdarstellung eines Teilnehmers des in Figur 1 gezeigten Automatisierungssystems,
- Figur 3: eine Blockdarstellung der Diagnosestation 1 des in Figur 1 gezeigten Automatisierungssystems,
- Figur 4: eine Blockdarstellung eines Teilnehmers bei einer zweiten Ausführungsform der Erfindung und
- Figur 5: eine Blockdarstellung der Diagnosestation 1 bei der zweiten Ausführungsform der Erfindung.

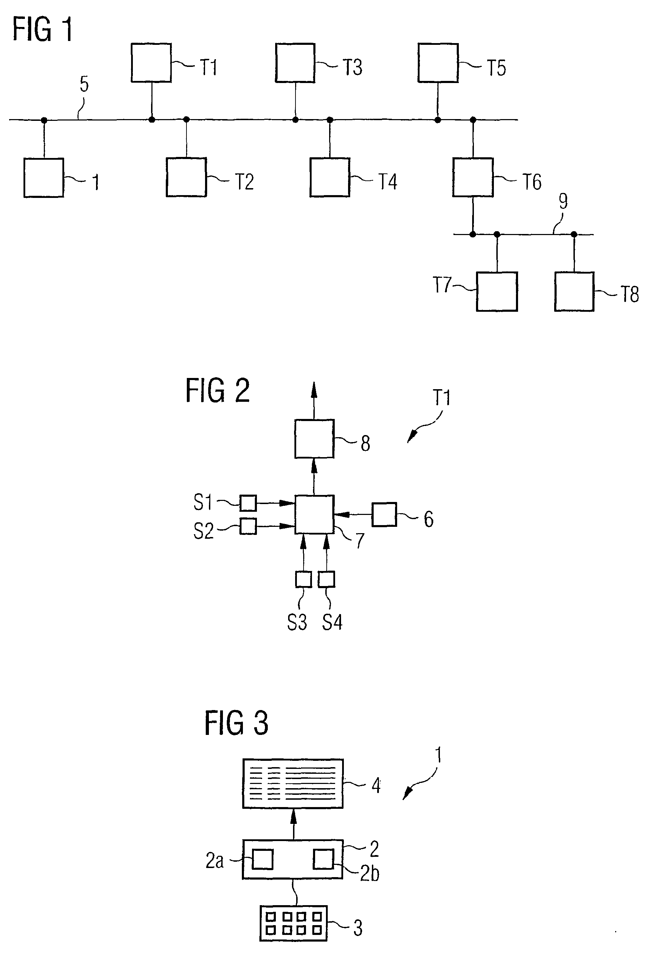

Die Figur 1 zeigt eine Blockdarstellung eines Automatisierungssystems. Dieses weist Teilnehmer T1, T2, T3, T4, T5 und T6 auf, die an einen gemeinsamen Kommunikationskanal 5 angeschlossen sind. Der Teilnehmer T6 ist auch mit einem weiteren Kommunikationskanal 9 verbunden, an welchen weitere Teilnehmer T7 und T8 angeschlossen sind.

Die genannten Teilnehmer können örtlich weit getrennt voneinander angeordnet sein. Zu diesen Teilnehmern gehören beispielsweise die Regler, Kessel, Ventile und Roboter einer Industrieanlage, die zur Fertigung eines Produktes vorgesehen ist. Weiterhin ist an den Kommunikationskanal 5 eine Diagnosestation 1 angeschlossen. Diese Diagnosestation kann in einer Leitzentrale des Automatisierungssystems angeordnet sein. Alternativ oder zusätzlich dazu kann eine Diagnosestation auch ein tragbares Gerät sein, beispielsweise ein Notebook, welches an einer beliebigen Stelle des Kommunikationskanals 5 an diesen angeschlossen werden kann. Bei dem gemeinsamen Kommunikationskanal 5 handelt es sich um das Ethernet oder um einen Bus, über welchen die Teilnehmer T1,...,T6 und die Diagnosestation 1 miteinander verbunden sind. An diesem Kommunikationskanal 5 sind ständig die den einzelnen Teilnehmern zugehörigen Diagnoseinformationen verfügbar, so dass die Diagnosestation 1 ständig Zugriff zu allen Diagnoseinformationen des Systems hat.

Jeder der an den Kommunikationskanal 5 angeschlossenen Teilnehmer stellt seine Diagnoseinformationen selbstständig und automatisch zur Verfügung. Die von den Teilnehmern zur Verfügung gestellten Diagnoseinformationen weisen gemäß einer ersten Ausführungsform der Erfindung ein und dasselbe Standardformat auf. Dies gilt unabhängig davon, von welchem Hersteller das jeweilige Teilnehmergerät hergestellt wurde. Folglich können gemäß der Erfindung Teilnehmer unterschiedlicher Hersteller in ein und demselben Automatisierungssystem eingesetzt werden, sofern alle diese Teilnehmer die von ihnen zur Verfügung gestellten Diagnoseinformationen in dem einheitlichen Standardformat bereitstellen.

Bei diesem einheitlichen Standardformat handelt es sich vorzugsweise um das XML-Format. Dieses entspricht einer Metasprache, die textbasiert zu übertragende Daten beschreibt. Diese Metasprache, die ursprünglich zu dem Zweck geschaffen wurde, Dokumente einfach zu strukturieren, wird bei der vorliegenden Erfindung dazu verwendet, Diagnoseinformationen in einem einheitlichen Format auf dem Kommunikationskanal 5 eines Automatisierungssystems zur Verfügung zu stellen.

Die von den Teilnehmern auf dem Kommunikationskanal bereitgestellten Diagnoseinformationen werden in der Diagnosestation 1 unter Verwendung eines Browsers in ein einheitliches Anzeigeformat umgewandelt und auf dem Display der Diagnosestation angezeigt.

Die Figur 2 zeigt eine Blockdarstellung des Teilnehmers T1 des in der Figur 1 gezeigten Automatisierungssystems. Der Teilnehmer T1 weist einen Speicher 6 auf, in welchem Kennsignale abgespeichert sind, die den Teilnehmer identifizieren. Zu diesen Kennsignalen gehören eine Angabe des Typs des Teilnehmers, Angaben über technische Daten des Teilnehmers und Angaben über den Hersteller des Teilnehmers. Weiterhin weist der Teilnehmer T1 eine Steuereinheit 7 auf, die Zugriff auf die im Speicher 6 abgelegten Daten hat. Der Steuereinheit 7 werden weiterhin von Sensoren S1, S2, S3 und S4 generierte Sensorsignale zugeführt. Diese enthalten Informationen über den Zustand einzelner Komponenten des Teilnehmers T1. Die Steuereinheit 7 fasst die aus dem Speicher 6 gelesenen Kennsignale mit den von den Sensoren abgeleiteten Sensorsignalen zu einer dem Teilnehmer T1 zugehörigen Diagnoseinformation zusammen und leitet sie einem Konverter 8 zu. Dieser wandelt die von der Steuereinheit 7 gelieferten Signale in das XML-Format um und stellt die im XML-Format vorliegenden Diagnoseinformationen dem Kommunikationskanal 5 zur Verfügung.

Die weiteren Teilnehmer T2,...,T8 sind ähnlich aufgebaut wie der Teilnehmer T1. Insbesondere weist jeder dieser Teilnehmer ebenfalls einen Konverter auf, der die Diagnoseinformationen des jeweiligen Teilnehmers im XML-Format zur Verfügung stellt. Die Teilnehmer T7 und T8 stellen ihre Diagnoseinformationen automatisch dem Kommunikationskanal 9 zur Verfügung. Der Teilnehmer T6, der sowohl an den gemeinsamen Kommunikationskanal 5 als auch an den Kommunikationskanal 9 angeschlossen ist, routet die auf dem Kommunikationskanal 9 zur Verfügung stehenden Diagnoseinformationen an den gemeinsamen Kommunikationskanal 5.

Die Figur 3 zeigt eine Blockdarstellung der Diagnosestation 1 des in der Figur 1 gezeigten Automatisierungssystems bei der ersten Ausführungsform der Erfindung. Die Diagnosestation 1 weist eine Bedieneinheit 3, eine Recheneinheit 2 und ein Display 4 auf. Auf dem Display 4 werden die von den Teilnehmern zur Verfügung gestellten Diagnoseinformationen angezeigt.

Zu diesem Zweck werden die auf dem Kommunikationskanal 5 im XML-Format vorliegenden Diagnoseinformationen zunächst der Recheneinheit 2 zugeführt. Diese weist einen Browser 2b auf, dessen Aufgabe darin besteht, die im XML-Format vorliegenden Diagnoseinformationen unabhängig vom Hersteller des jeweiligen Teilnehmers in ein einheitliches Anzeigeformat umzuwandeln und dem Display 4 zur Verfügung zu stellen.

Die Diagnoseinformationen werden auf dem Display 4 in Form einer Liste angezeigt. In der Liste ist jedem Teilnehmer eine eigene Anzeigezeile zugeordnet. In der Zeile 1 der Liste werden beispielsweise Diagnoseinformationen des ersten gestörten Teilnehmers und in der Zeile 2 der Liste die Diagnoseinformationen des nächsten gestörten Teilnehmers dargestellt, usw.. Innerhalb jeder Displayzeile sind verschiedene Bereiche vorgesehen, wobei in einem ersten Bereich eine laufende Nummer, in einem zweiten Bereich eine Teilnehmerkennung und in einem dritten Bereich eine Information über den Zustand des Teilnehmers dargestellt wird. Die Information über den Zustand des Teilnehmers kann ein Alarmsignal, eine Fehlermeldung oder eine Meldung eines störungsfreien Zustands sein.

Wird ein Teilnehmer neu an den Kommunikationskanal 5 angeschlossen, dann stellt er sofort und automatisch dem Kommunikationskanal 5 eine Diagnoseinformation zur Verfügung, die im XML-Format vorliegt und den neu angeschlossenen Teilnehmer identifizierende Kennsignale enthält. Zu diesen Kennsignalen gehören Angaben des Herstellers des Teilnehmers und Angaben über den Typ des Teilnehmers.

Alternativ zur Darstellung der Diagnoseinformationen in Form einer Liste können die Diagnoseinformationen auch in Form einer grafischen Darstellung angezeigt werden. Sind beispielsweise Anlagenhierarchien bekannt, könnte eine vollgrafische Darstellung (Hauptknoten, Unterknoten, Grafiken, etc.) automatisch erzeugt werden.

Beim vorstehend beschriebenen Automatisierungssystem stehen folglich der Diagnosestation ständig alle verfügbaren Diagnosedaten der angeschlossenen Teilnehmer zur Verfügung. Die Diagnosestation kann zu beliebigen Zeitpunkten und an beliebigen Stellen des Kommunikationskanals auf diese Daten zugreifen.

Eine vorteilhafte Weiterbildung der Erfindung besteht darin, die Recheneinheit 2 weiterhin mit einer Selektionskomponente 2a auszustatten, bei der es sich um ein Softwarepaket handeln kann. Mittels dieser Selektionskomponente kann unter allen angeschlossenen Teilnehmern eine Selektion durchgeführt werden, aufgrund welcher nur die den selektierten Teilnehmern zugehörigen Diagnoseinformationen auf dem Display angezeigt werden. Beispielsweise besteht die Möglichkeit, sich nur alle Diagnoseinformationen anzeigen zu lassen, die von den Kesseln des Gesamtsystems stammen, oder nur Diagnoseinformationen anzeigen zu lassen, die von Reglern des Automatisierungssystems stammen.

Vorzugsweise weist die Diagnosestation 1 eine Bedieneinheit 3 auf, mittels derer ein Bediener Selektionskriterien vorgeben kann. Wird beispielsweise im Laufe eines Prozesses erkannt, dass bestimmte Teilnehmer des Automatisierungssystems des öfteren in kritische Zustände geraten und aus diesem Grund ständig beobachtet werden müssen, dann kann eine Selektion dieser Teilnehmer durch eine Eingabe entsprechender Selektionskriterien mittels der Bedieneinheit 3 programmiert werden.

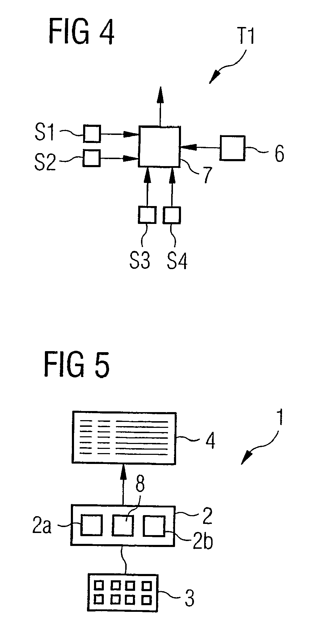

Die Figur 4 zeigt eine Blockdarstellung eines Teilnehmers des Automatisierungssystems bei einer zweiten Ausführungsform der Erfindung. Die Figur 5 zeigt eine Blockdarstellung der Diagnosestation 1 bei der zweiten Ausführungsform. Bei dieser zweiten Ausführungsform ist der Konverter 8, der zur Umsetzung der Diagnoseinformationen in ein einheitliches Standardformat, beispielsweise das XML-Format, vorgesehen ist, nicht im Teilnehmer, sondern in der Diagnosestation 1 vorgesehen.

Bei dieser zweiten Ausführungsform stellen die einzelnen Teilnehmer des Automatisierungssystems ihre Diagnoseinformationen jeweils in proprietärer Form zur Verfügung, d. h. in einem vom Hersteller des jeweiligen Teilnehmers abhängigen Format. Die Umwandlung dieser Informationen in das einheitliche Standardformat erfolgt erst in der Diagnosestation 1 im dort vorgesehenen Konverter 8. Dessen Ausgangssignal wird an den Browser 2b der Diagnosestation 1 weitergeleitet, in diesem in ein einheitliches Anzeigeformat umgewandelt und dann dem Display 4 zur Verfügung gestellt.

## Patentansprüche

1. Automatisierungssystem, welches eine Vielzahl von Teilnehmern aufweist, die an einen gemeinsamen Kommunikationskanal angeschlossen sind, wobei
- jeder dieser Teilnehmer (T1,...,T6) dazu vorgesehen ist, die ihm zugehörigen Diagnoseinformationen automatisch auf dem Kommunikationskanal (5) zur Verfügung zu stellen,
- an den Kommunikationskanal (5) weiterhin eine Diagnosestation (1) angeschlossen ist, welche einen Browser (2b), der die auf dem Kommunikationskanal vorliegenden Diagnoseinformationen in ein einheitliches Anzeigeformat umsetzt, und ein mit dem Browser verbundenes Display (4) aufweist, welches zur Anzeige der vom Browser bereitgestellten Diagnoseinformationen vorgesehen ist,
**dadurch gekennzeichnet, dass**
es einen weiteren Kommunikationskanal (9) aufweist, dass einer der Teilnehmer (T6) sowohl an den gemeinsamen Kommunikationskanal (5) als auch an den weiteren Kommunikationskanal (9) angeschlossen ist, dass an den weiteren Kommunikationskanal (9) weitere Teilnehmer (T7,T8) angeschlossen sind, dass die weiteren Teilnehmer (T7,T8) dazu vorgesehen sind, automatisch Diagnoseinformationen auf dem weiteren Kommunikationskanal (9) zur Verfügung zu stellen und dass der an beide Kommunikationskanäle (5 und 9) angeschlossene Teilnehmer (T6) dazu vorgesehen ist, die auf dem weiteren Kommunikationskanal vorliegenden Diagnoseinformationen an den gemeinsamen Kommunikationskanal (5) zu routen.

2. Automatisierungssystem nach Anspruch 1, **dadurch gekennzeichnet, dass** jeder der Teilnehmer (T1,...T6) einen Konverter (8) aufweist, der im Teilnehmer generierte Diagnoseinformationen in ein Standardformat umsetzt.

3. Automatisierungssystem nach Anspruch 1, **dadurch gekennzeichnet, dass** die Diagnosestation (1) einen Konverter (8) aufweist, der die in den Teilnehmern generierten Diagnoseinformationen in ein Standardformat umsetzt.

4. Automatisierungssystem nach Anspruch 2 oder 3, **dadurch gekennzeichnet, dass** der Konverter (8) die Diagnoseinformationen in das XML-Format umsetzt.

5. Automatisierungssystem nach einem der vorhergehenden Ansprüche, **dadurch gekennzeichnet, dass** ein Teilnehmer dazu vorgesehen ist, nach seinem Anschluss an den gemeinsamen Kommunikationskanal (5) automatisch Diagnoseinformationen auf dem Kommunikationskanal zur Verfügung zu stellen, welche den neu angeschlossenen Teilnehmer identifizierende Kennsignale enthalten.

6. Automatisierungssystem nach einem der vorhergehenden Ansprüche, **dadurch gekennzeichnet, dass** die auf dem Display (4) angezeigten Diagnoseinformationen in Form einer grafischen Darstellung oder einer Liste dargestellt werden.

7. Automatisierungssystem nach Anspruch 6, **dadurch gekennzeichnet, dass** in der Displaydarstellungdie verschiedenen Teilnehmern zugehörigen Diagnoseinformationen in einem einheitlichen Anzeigeformat angezeigt werden.

8. Automatisierungssystem nach Anspruch 7, **dadurch gekennzeichnet, dass** die Displaydarstellung Diagnoseinformationen enthält, die unabhängig vom Hersteller des jeweiligen Teilnehmers ein einheitliches Anzeigeformat aufweisen.

9. Automatisierungssystem nach einem der vorhergehenden Ansprüche, **dadurch gekennzeichnet, dass** jeder Teilnehmer (T1,...,T6) dazu vorgesehen ist, seine Diagnoseinformationen ständig dem Kommunikationskanal (5) zur Verfügung zu stellen, so dass die Diagnosestation (1) ständigen Zugriff auf die Diagnosedaten aller an den Kommunikationskanal angeschlossenen Teilnehmer hat.

10. Automatisierungssystem nach einem der vorhergehenden Ansprüche, **dadurch gekennzeichnet, dass** die Diagnosestation (1) eine Selektionskomponente (2a) aufweist, mittel derer unter allen angeschlossenen Teilnehmern eine Selektion durchführbar ist, aufgrund welcher nur die den selektierten Teilnehmern zugehörigen Diagnoseinformationen auf dem Display (4) angezeigt werden.

11. Automatisierungssystem nach Anspruch 10, **dadurch gekennzeichnet, dass** die Diagnosestation (1) eine Bedieneinheit (3) aufweist, die zur Eingabe von Selektionskriterien vorgesehen ist.

## Claims

1. Automation system which has a multiplicity of subscribers which are connected to a common communication channel, wherein
- each of these subscribers (T1, ..., T6) is provided for the purpose of automatically making its associated diagnosis information available on the communication channel (5),
- the communication channel (5) also has a diagnosis station (1) connected to it which has a browser (2b), which converts the diagnosis information present on the communication channel to a standard display format, and a display (4), which is connected to the browser and which is provided for the purpose of displaying the diagnosis information provided by the browser,
**characterized in that**
it has a further communication channel (9), **in that** one of the subscribers (T6) is connected both to the common communication channel (5) and to the further communication channel (9), **in that** the further communication channel (9) has further subscribers (T7, T8) connected to it, **in that** the further subscribers (T7, T8) are provided for the purpose of automatically making diagnosis information available on the further communication channel (9), and **in that** the subscriber (T6) connected to both communication channels (5 and 9) is provided for the purpose of routing the diagnosis information present on the further communication channel to the common communication channel (5).

2. Automation system according to Claim 1, **characterized in that** each of the subscribers (T1, ..., T6) has a converter (8) which converts diagnosis information generated in the subscriber into a standard format.

3. Automation system according to Claim 1, **characterized in that** the diagnosis station (1) has a converter (8) which converts the diagnosis information generated in the subscribers into a standard format.

4. Automation system according to Claim 2 or 3, **characterized in that** the converter (8) converts the diagnosis information into the XML format.

5. Automation system according to one of the preceding claims, **characterized in that** a subscriber is provided for the purpose of, subsequent to its connection to the common communication channel (5), automatically making diagnosis information available on the communication channel, which diagnosis information contains identification signals identifying the newly connected subscriber.

6. Automation system according to one of the preceding claims, **characterized in that** the diagnosis information displayed on the display (4) is presented in the form of a graphical presentation or a list.

7. Automation system according to Claim 6, **characterized in that** the display presentation displays the diagnosis information associated with various subscribers in a standard display format.

8. Automation system according to Claim 7, **characterized in that** the display presentation contains diagnosis information which has a standard display format regardless of the manufacturer of the respective subscriber.

9. Automation system according to one of the preceding claims, **characterized in that** each subscriber (T1, ..., T6) is provided for the purpose of making its diagnosis information continually available to the communication channel (5), so that the diagnosis station (1) has continual access to the diagnosis data from all the subscribers connected to the communication channel.

10. Automation system according to one of the preceding claims, **characterized in that** the diagnosis station (1) has a selection component (2a) which can be used to make a selection among all the connected subscribers which is taken as a basis for displaying only the diagnosis information associated with the selected subscribers on the display (4).

11. Automation system according to Claim 10, **characterized in that** the diagnosis station (1) has an operator control unit (3) which is provided for the purpose of inputting selection criteria.

## Revendications

1. Système d'automatisation qui a une pluralité d'abonnés qui sont raccordés à un canal de communication commun, dans lequel
- chacun de ces abonnés (T1,...,T6) est prévu pour mettre à disposition les informations de diagnostic qui le concerne automatiquement sur le canal (5) de communication,
- au canal (5) de communication est raccordé en outre un poste (1) de diagnostic, qui a un navigateur (2b) transformant en un format d'affichage unitaire les informations de diagnostic présentes sur le canal de communication et un affichage (4) relié au navigateur est prévu pour afficher les informations de diagnostic procurées par le navigateur,
**caractérisé en ce que**,
il y a un autre canal (9) de communication, **en ce que** l'un des abonnés (T6) est raccordé à la fois au canal (5) de communication commun et à l'autre canal (9) de communication, **en ce que** d'autres abonnés (T7, T8) sont raccordés à l'autre canal (9) de communication, **en ce que** les autres abonnés (T7, T8) sont prévus pour mettre à disposition automatiquement des informations de diagnostic sur l'autre canal (9) de communication et **en ce que** l'abonné (T6) raccordé aux deux canaux (5 et 9) de communication est prévu pour acheminer les informations de diagnostic présentes sur l'autre canal de communication au canal (5) de communication commun.

2. Système d'automatisation suivant la revendication 1, **caractérisé en ce que** chacun des abonnés (T1,...T6) a un convertisseur (8) qui met dans un format standard des informations de diagnostic produites par l'abonné.

3. Système d'automatisation selon l'une des revendications 1, **caractérisé en ce que** le poste (1) de diagnostic a un convertisseur (8) qui met dans un format standard les informations de diagnostic produites dans les abonnés.

4. Système d'automatisation selon l'une des revendications 2 ou 3, **caractérisé entre** le convertisseur (8), met les informations de diagnostic dans le format XML.

5. Système d'automatisation selon l'une des revendications précédentes, **caractérisé en ce qu'**un abonné est prévu pour mettre à disposition, après son raccordement au canal (5) de communication commun, automatiquement des informations de diagnostic sur le canal de communication, qui contiennent des signaux caractéristiques identifiant l'abonné nouvellement raccordé.

6. Système d'automatisation selon l'une des revendications précédentes, **caractérisé en ce que** les informations de diagnostic affichées sur l'affichage (4) sont représentées sous la forme d'une représentation graphique ou d'une liste.

7. Système d'automatisation selon l'une des revendications 6, **caractérisé en ce que**, dans la représentation par affichage, les informations de diagnostic appartenant aux divers abonnés sont affichées dans un format d'affichage unitaire.

8. Système d'automatisation selon l'une des revendications 7, **caractérisé en ce que** la représentation par affichage contient des informations de diagnostic, qui ont un format d'affichage unitaire indépendamment du fabricant de l'abonné respectif.

9. Système d'automatisation d'automatisation selon l'une des revendications précédentes, **caractérisé en ce que** chaque abonné (T1..., T6) est prévu pour mettre constamment à disposition du canal (5) de communication ses informations de diagnostic de sorte que le poste (1) de diagnostic a accès constamment aux données de diagnostic de tous les abonnés raccordés au canal de communication.

10. Système d'automatisation selon l'une des revendications précédentes, **caractérisé en ce que** le poste (1) de diagnostic a un composant (2a) de sélection, au moyen duquel peut être effectué entre tous les abonnés raccordés une sélection sur la base de laquelle seules les informations de diagnostic appartenant aux abonnés sélectionnés sont affichées sur l'affichage (4).

11. Système selon l'une des revendications 10, **caractérisé en ce que** le poste (1) de diagnostic a une unité (3) de serveur qui est prévue pour l'entrée de critères de sélection.
